# EUROPÄISCHE PATENTSCHRIFT

(11) **EP 3 231 575 B1**
(45) Veröffentlichungstag und Bekanntmachung des Hinweises auf die Patenterteilung: **31.10.2018**
(21) Anmeldenummer: 17000504.5
(22) Anmeldetag: 27.03.2017
(51) Int. Cl.: B29C 47/00, B29C 47/36, B29C 47/60, B29C 47/68, B29C 47/80, B29C 47/88

(54) **VERFAHREN UND VORRICHTUNG ZUR HERSTELLUNG EINES PRODUKTS AUS THERMOPLASTISCHEM MATERIAL DURCH EXTRUSION**
METHOD AND DEVICE FOR PRODUCING A PRODUCT MADE OF A THERMOPLASTIC MATERIAL BY EXTRUSION
PROCÉDÉ ET DISPOSITIF DE FABRICATION D'UN PRODUIT EN MATÉRIAU THERMOPLASTIQUE PAR EXTRUSION

(30) Priorität: 13.04.2016 DE 102016004617
(43) Veröffentlichungstag der Anmeldung: 18.10.2017
(73) Patentinhaber: SML Maschinengesellschaft m.b.H., 4860 Lenzing (AT)
(72) Erfinder: Hörlesberger, Roland, A - 4850 Timelkam (AT); Kritzinger, Martin, A - 4860 Lenzing (AT); Dröge, Berthold, A - 4816 Gschwandt (AT)
(74) Vertreter: Gosdin, Michael

(56) Entgegenhaltungen:
- EP-A1- 0 291 179
- EP-A1- 2 567 799
- EP-A2- 0 376 671
- EP-A2- 1 211 048
- DE-A1-102005 020 794
- US-A1- 2014 264 994
- Di Günther Klammer ET AL: "M-A-S Maschinen-und Anlagenbau Schulz GmbH Hobelweg 1, 4055 Pucking AUSTRIA Telephone: Compounding and direct extrusion of WPCs and PPCs with the conical co-rotating twin screw extruder (NCT) Authors", , 8. Februar 2009 (2009-02-08), XP055392292, Gefunden im Internet: URL:http://www.johnwoodassociates.com/Broc hures/WPC_presentation_engl_rev-2.pdf [gefunden am 2017-07-19]

## Beschreibung

Die Erfindung betrifft ein Verfahren zur Herstellung eines Produkts aus thermoplastischem Material durch Extrusion, bei dem das Material in einem Extruder plastifiziert und in eine Förderrichtung zu einem Extrusionswerkzeug gefördert wird, durch das das Material unter Formgebung ausgebracht wird, wobei zwischen dem Auslass des Extruders und dem Einlass des Extrusionswerkzeugs mindestens ein Schmelzekühler angeordnet ist, mit dem das im Extruder plastifizierte Material gekühlt wird. Des weiteren betrifft die Erfindung eine Vorrichtung zur Herstellung eines Produkts aus thermoplastischem Material.

Die Extrusion thermoplastischer Produkte erfolgt zumeist durch den Einsatz von Einschneckenextrudern und Mehrschneckenextrudern. Seltener kommen Planetwalzenextruder zum Einsatz. Extruder können dabei für bestimmte Aufgaben auch kaskadiert werden.

Ein Verfahren der eingangs genannten Art wird in der DE 10 2005 020 794 A1 beschrieben. Ähnliche Verfahren beschreiben die EP 2 567 799 A1**,** die US 2014/264994 A1**,** die EP 0 291179 A1 und die EP 1211 048 A2**.**

In Abhängigkeit des herzustellenden Endprodukts und des verwendeten Polymers können Extruder mit variierenden Zusatzeinrichtungen ergänzt werden, um die Anforderungen an die Schmelzequalität bei der geforderten Produktionsleistung und dem benötigten Werkzeugdruck zu erfüllen. Diese Anforderungen können vielfältig sein, beispielsweise das Einhalten einer definierte Massetemperatur, einer bestimmten thermischen Homogenität und Mischhomogenität.

Häufig erfordert die Formgebung nach dem Extrusionswerkzeug eine hinreichende Schmelzefestigkeit, d. h. die Schmelze muss eine vorgegebene hinreichend hohe Viskosität aufweisen. Dies gilt zum Beispiel für die Extrusion von Platten in einem Glättwerk, wo eine niedrigviskose Schmelze durch den Walzenspalt durchtropfen würde. Eine Platte wäre so nicht herstellbar.

Die Schmelzefestigkeit wird bei thermoplastischen Polymeren sehr wesentlich durch die Massetemperatur beeinflusst. Eine niedrigere Massetemperatur bedeutet dabei eine höhere Schmelzestabilität. Deshalb wird in der Praxis versucht, die Massetemperatur so niedrig wie möglich einzustellen.

Nachdem neben der Massetemperatur eine gute Schmelzehomogenität ein weiterer essenzieller Parameter ist, muss der Extruder auch diese Anforderung erfüllen. Dazu sind auf der Schnecke mischende Elemente verbaut, die allerdings einen negativen Einfluss auf die Massetemperatur haben.

Besonders schwierig stellt sich die Aufgabe für den Extruder dar, wenn neben Neuware (Granulat) auch Materialien zum Einsatz kommen, die schon einmal einem Extrusions- oder einem anderen Formgebungsprozess unterlegen sind (Mahlgut). Solche Materialien werden sowohl aus Gründen der Abfallvermeidung als auch aus Kostengründen eingesetzt.

Derartige Materialien weisen allerdings eine geringere Schüttdichte auf als Granulat, wodurch die Schneckendrehzahl erhöht werden muss. Eine höhere Schneckendrehzahl hat wiederum einen negativen Einfluss auf die Massetemperatur.

Da sich häufig auch die Morphologie durch die Wiederverarbeitung in der Art ändert, dass die Materialien dünnflüssiger werden, ist wiederum eine niedrigere Massetemperatur zum Erhalt der Schmelzefestigkeit notwendig.

Manche Thermoplaste sind zudem hygroskopisch und unterliegen bei ihrer Verarbeitungstemperatur der Hydrolyse, wenn sie nicht vor der Zugabe in den Extruder getrocknet werden. Der Trocknungsprozess ist zeitaufwändig und energetisch nicht ideal; daher werden derartige Materialien alternativ auf Extrudern mit Hochvakuum entgast. Da die hydrolytische Reaktion sehr schnell abläuft, werden die Materialien trotzdem teilweise chemisch abgebaut, wodurch die Schmelze dünnflüssiger und die Schmelzesteifigkeit verschlechtert wird. Bevorzugt wird die Hochvakuumentgasung bei gleichlaufenden Doppelschneckenextrudern eingesetzt.

Besonders anspruchsvoll ist die Herstellung von geschäumten Produkten. Der Schäumprozess erfolgt häufig nach dem Austritt aus dem Werkzeug. Zur Erreichung einer guten Schaumstruktur muss die Schmelze stofflich und thermisch sehr homogen beschaffen sein. Außerdem ist eine hohe Schmelzefestigkeit unverzichtbar, andernfalls zerplatzen die Zellwände und die Schmelze kollabiert.

Schmelzekühler sind als solche im Stand der Technik bekannt. Bei prozesstechnisch richtiger Dimensionierung kann die Schmelzetemperatur bei wirtschaftlicher Produktionsmenge lediglich um 5 bis 10 °C abgekühlt werden. Diese Temperaturreduktion reicht in einigen Fällen nicht aus, um eine ausreichende Schmelzefestigkeit zu gewährleisten.

Die AT 507 972 B2 beschreibt einen konischen Doppelschneckenextruder als solchen. In der EP 2 376 267 B1 werden parallele Doppelschneckenextruder thematisiert und die Produktion von geschäumten Produkten offenbart. In der EP 2 865 503 A1 wird der Einsatz eines Schmelzekühlers beschrieben. Weitere Lösungen werden in der US 2002/0068105 A1 und in der EP 0 376 671 A2 offenbart. Ein konischer Doppelschneckenextruder wird auch im Beitrag von G. Klammer et al. "Compounding and direct extrusion of WPCs and PPCs with the conical co-rotating twin screw extruder (NCT)" beschrieben (XP055392292).

Der Erfindung liegt die **Aufgabe** zugrunde, ein Verfahren der eingangs genannten Art sowie eine entsprechende Vorrichtung zu schaffen, mit dem bzw. mit der es möglich ist, die oben genannten Unzulänglichkeiten zu überwinden. Es soll also möglich werden, aus einem möglichst breiten Spektrum verschiedener Polymere und von Granulat abweichender Schüttdichte durch hohe Schmelzefestigkeit und gute Schmelzehomogenität hochwertige Produkte herzustellen. Ferner wird angestrebt, im gegebenen Falle im Produkt einen qualitativ hochwertigen Schaum herzustellen; weiterhin soll es möglich werden, möglichst dicke Folien aus relativ minderwertigem, d. h. sehr dünnflüssigem Polymer herzustellen. Dabei sollen also mit einem möglichst breiten Spektrum verschiedener Polymere hochwertige Produkte hergestellt werden können.

Die **Lösung** dieser Aufgabe durch die Erfindung ist dadurch gekennzeichnet, dass der Extruder als Doppelschneckenextruder mit zwei miteinander in Eingriff stehenden konischen Schnecken ausgebildet ist, wobei die beiden Schnecken bei der Extrusion von einem Antrieb gleichsinnig gedreht werden.

Mit dem vorgeschlagenen Verfahren wird bevorzugt ein bahnförmiges Produkt hergestellt, das eine Breite und eine Dicke aufweist, wobei die Breite mindestens das 25-fache der Dicke beträgt; das Produkt ist dabei bevorzugt eine Folie oder Platte.

An mindestens einer Stelle im Bereich des Extruders, im Bereich des Extrusionswerkzeugs und/oder zwischen dem Extruder und dem Extrusionswerkzeug wird gemäß einer bevorzugten Ausgestaltung des Verfahrens dem Material ein Medium, insbesondere ein Schäumungsmedium, zugegeben.

An mindestens einer Stelle zwischen dem Extruder und dem Extrusionswerkzeug wird vorzugsweise der Druck im plastifizierten Material erhöht oder reduziert, vorzugsweise mittels einer Zahnradpumpe. Der Druck im plastifizierten Material wird insbesondere zwischen dem Extruder und dem Schmelzekühler und zwischen dem Schmelzekühler und dem Extrusionswerkzeug erhöht oder reduziert.

Bezüglich der von den Schmelzepumpen aufgebauten Druck sei folgendes bemerkt: Vorteilhaft ist es zumeist, den Druck an der Stelle möglichst hoch zu halten, wo Gas eingespritzt wird. Nachdem die Schmelze gekühlt ist, kann der Druck reduziert werden, ohne dass das Gas freigesetzt wird. Aus diesem Grunde werden vorteilhaft zwei Pumpen eingesetzt. Die Verfahrensabfolge ist demgemäß zunächst den Druck zu erhöhen, dann Gas einzuspritzen, dann zu kühlen und dann den Druck zu reduzieren. Eine zweite Pumpe ist demgemäß von Vorteil; ohne diese könnte der Werkzeugdruck zu gering sein, um einen ausreichenden Druck vor dem Schmelzekühler zu erreichen.

Weiterhin kann vorgesehen werden, dass an mindestens einer Stelle zwischen dem Extruder und dem Extrusionswerkzeug das plastifizierte Material gemischt wird, vorzugsweise mittels eines statischen Mischers. Das plastifizierte Material wird dabei insbesondere zwischen dem Schmelzekühler und dem Extrusionswerkzeug gemischt.

An mindestens einer Stelle zwischen dem Extruder und dem Extrusionswerkzeug kann weiterhin das plastifizierte Material mittels eines Schmelzefilters gefiltert werden. Das plastifizierte Material wird insbesondere zwischen dem Extruder und dem Schmelzekühler gefiltert.

Dem plastifizierten Material kann weiterhin an mindestens einer Stelle zwischen dem Extruder und dem Extrusionswerkzeug ein weiteres Material zugemischt werden, vorzugsweise mittels Co-Extrusion durch einen weiteren Extruder. Das Zumischen des weiteren Materials erfolgt dabei bevorzugt unmittelbar vor dem Extrusionswerkzeug.

Das plastifizierte Material kann weiterhin an mindestens einer Stelle im Extruder und/oder zwischen dem Extruder und dem Extrusionswerkzeug entgast werden.

Ferner ist bevorzugt vorgesehen, dass das plastifizierte Material im Extrusionswerkzeug eine Viskosität von mehr als 1.000 Pa.s (Pascal-Sekunden) aufweist.

Eine weitere vorteilhafte Ausgestaltung der Erfindung besteht im chemischen Schäumen des plastifizierten Materials, d. h. der Kunststoffschmelze. Demgemäß wird ein chemisches Schäummittel gemeinsam mit dem Thermoplast dem Extruder zugeführt und durch die Extrusionsvorrichtung verarbeitet.

Die Vorrichtung zur Herstellung eines Produkts aus thermoplastischem Material, umfassend einen Extruder zum Plastifizieren des Materials und Ausbringen in eine Förderrichtung zu einem Extrusionswerkzeug, das das Material unter Formgebung ausbringen kann, wobei zwischen dem Auslass des Extruders und dem Einlass des Extrusionswerkzeugs ein Schmelzekühler zur Kühlung des im Extruder plastifizierten Materials angeordnet ist, sieht erfindungsgemäß vor, dass der Extruder als Doppelschneckenextruder mit zwei miteinander in Eingriff stehenden konischen Schnecken ausgebildet ist, wobei die beiden Schnecken mit einem Antrieb zum gleichsinnigen Drehen während der Extrusion in Verbindung stehen.

An mindestens einer Stelle zwischen dem Extruder und dem Extrusionswerkzeug ist vorzugsweise eine Pumpe, vorzugsweise eine Zahnradpumpe, angeordnet.

Schließlich kann vorgesehen sein, dass an mindestens einer Stelle zwischen dem Extruder und dem Extrusionswerkzeug ein Mischer, vorzugsweise ein statischer Mischer, und/oder ein Schmelzefilter und/oder mindestens eine Anordnung zur Eingabe eines Schäumungsmediums und/oder mindestens eine Entgasungseinrichtung angeordnet ist.

Die vorgeschlagene Lösung stellt also auf einen gleichdrehenden konischen Doppelschneckenextruder und einen Schmelzekühler ab, der zwischen dem Extruder und dem Werkzeug angeordnet ist. Der konische gleichdrehende Doppelschneckenextruder hat konstruktionsbedingt ein sehr großes freies Volumen im Bereich der Materialaufgabe. Es hat sich herausgestellt, dass bei gleichbleibender Schneckendrehzahl ein viel breiterer Bereich von Schüttdichten verarbeitet werden kann als mit parallelen gleichdrehenden Doppelschneckenextrudern bzw. Einschneckenextrudern. Dadurch, dass die Schneckendrehzahl niedrig bleiben kann, bleibt auch die Massetemperatur niedrig und damit die Schmelzesteifigkeit hoch. Der Schmelzekühler kühlt die Schmelze weiter herunter.

Mit dieser Anordnung konnten überraschenderweise etliche Produkte hergestellt werden, die mit anderen Extrusionseinrichtungen nicht hergestellt werden können.

Ein Beispiel hierfür ist die bevorzugte erfindungsgemäße Herstellung von PET-Folien in einem Stärkenbereich von mehr als 1 mm aus nicht vorgetrocknetem Mahlgut und einem IV kleiner 0,7. Das Material kann durch die vorgeschlagene erfindungsgemäße Gestaltung mit einer so hohen Schmelzefestigkeit hergestellt werden, dass es nicht durch den Walzenspalt eines nachgelagerten Glättwerks tropft. So lassen sich dickere Folien wirtschaftlich aus relativ minderwertigerem Mahlgut herstellen.

Ein anderes Beispiel ist die bevorzugte erfindungsgemäße Herstellung geschäumter PET-Folie. Dazu kann an verschiedenen Stellen der Anlage ein Schäummittel zugeführt werden. PET gilt als schwierig zu schäumendes Material, weil die Schmelzefestigkeit sehr gering ist. Die vorgeschlagene Vorgehensweise hat überraschenderweise gezeigt, dass die Schmelzefestigkeit höher als bei anderen Prozessen und dadurch eine feinzelligere Schaumstruktur zu erzielen ist.

Mit der vorgeschlagenen Ausgestaltung des Verfahrens bzw. der Vorrichtung kann eine relativ niedrige Massetemperatur des Materials gefahren werden.

Es hat sich herausgestellt, dass die noch nicht lange am Markt verfügbaren konischen, gleichdrehenden Doppelschneckenextruder generell niedrigere Massetemperaturen bei der Verarbeitung erlauben als konventionelle parallele, gleichdrehende Doppelschneckenextruder.

Somit ergibt sich überraschenderweise und vorteilhaft eine besonders hohe Produktqualität sowohl bei Schaum als auch bei Kompaktfolie.

Mit der vorgeschlagenen Vorgehensweise bzw. Vorrichtung ist es möglich, eine relativ geringe Massetemperatur am Werkzeugaustritt zu erreichen. Dies ist besonders wichtig bei der Herstellung geschäumter Produkte sowie im Falle der Verarbeitung von leichtfließende (niedrigviskosen) Schmelzen (wie beispielsweise rezykliertes PET), damit in einem Glättwerk, das dem Extrusionswerkzeug nachgeschaltet ist, dickere Folien hergestellt werden können.

Vorteilhafterweise ergeben sich somit gute stoffliche und thermische Homogenisierungen, was im Falle des Einsatzes zusätzlicher Statikmischer noch verbessert wird.

Es ist eine Verarbeitung von Mahlgut mit geringer Schüttdichte bei niedriger Massetemperatur möglich, was sich insbesondere aufgrund des Einsatzes der konischen, gleichdrehenden Extruder möglich ist, die besser verdichten.

Zu den erfindungsgemäß bevorzugten Anwendungsfällen ist folgendes zu sagen:
Besonders interessant sind das vorgeschlagene Verfahren sowie die entsprechende Vorrichtung beim Ersatz von FFS-Folie für Molkereiprodukte. Diese Verpackungen, meist Joghurt-Mehrfachverpackungen, werden derzeit zumeist noch aus Polystyrol hergestellt. Wichtig Eigenschaften der Verpackungen sind der Lichtschutz, die Siegelfähigkeit, die Kälteschlagzähigkeit und das Auseinanderbrechen der Becher beim Verbraucher. Es besteht das Verlangen, Polystyrol durch einen anderen Thermoplast zu ersetzen. Bevorzugt wäre der Einsatz des Materials PET. Hier stellt sich zumeist das Problem des Auseinanderbrechens der Becher. Gutes PET ist so zäh, dass es nicht leicht zu brechen ist. Schlechtes PET ist zu brüchig und kann gar nicht dick genug geglättet werden, weil es zu dünnflüssig in der Extrusion ist. Hier bietet das vorgeschlagene Verfahren und die entsprechende Vorrichtung eine gute Möglichkeit, einfacher eine geeignete PET-Folie herzustellen als mit anderen Verfahren.

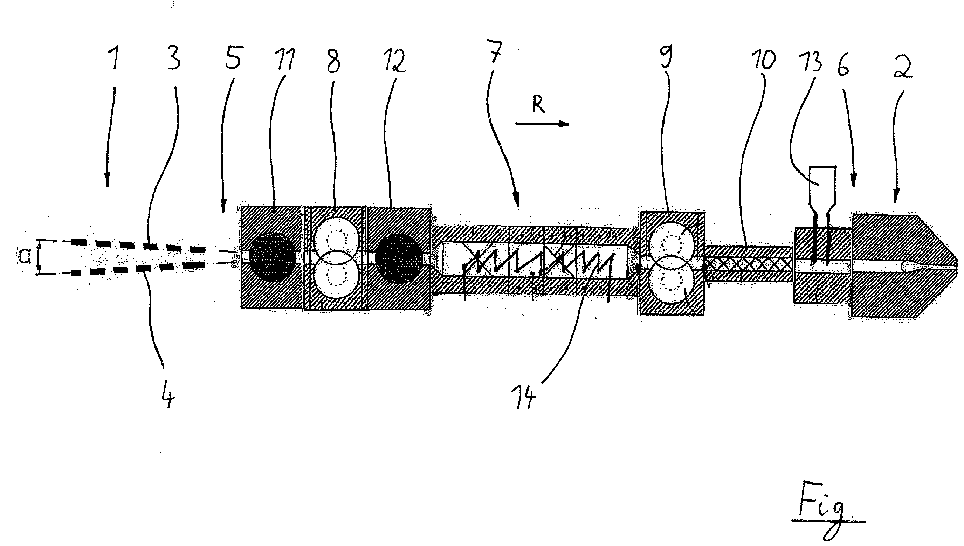

In der Zeichnung ist ein Ausführungsbeispiel der Erfindung dargestellt. Die einzige Figur zeigt schematisch den Aufbau einer Vorrichtung zur Herstellung eines Produkts aus thermoplastischem Material.

In der Figur ist eine Vorrichtung zur Herstellung einer Folie dargestellt, die es erlaubt, relativ minderwertiges Rohrmaterial zu einem einwandfreien Produkt zu verarbeiten.

Die Vorrichtung weist einen Extruder 1 auf, der als konischer Doppelschneckenextruder ausgebildet ist und der zwei Schnecken 3 und 4 aufweist, die im Betrieb in gleicher Drehrichtung rotieren. Ein derartiger konischer Doppelschneckenextruder ist in der AT 507 972 B1 beschrieben, auf die insoweit ausdrücklich Bezug genommen wird. In der Figur ist ein Winkel α angegeben, der andeutet, dass es sich bei den Schnecken 3 und 4 um konische zulaufende Schnecken handelt.

In Förderrichtung R nachgeschaltet ist dem Extruder 1 ein Extrusionswerkzeug 2, das die Schmelze, die im Extruder 1 produziert wurde, ausbringt und zum gewünschten Produkt formt.

Zwischen dem Auslass 5 des Extruders 1 und dem Einlass 6 des Extrusionswerkzeugs 2 ist ein Schmelzekühler 7 angeordnet, der von einem Temperierungsfluid durchflossen wird und die im Extruder 1 produzierte Schmelze kühlt. Die Kühlvorrichtung ist mit dem Bezugszeichen 14 angedeutet.

Das einwandfreie Fördern der im Extruder 1 produzierten Schmelze durch die gesamte Vorrichtung wird durch eine erste Zahnradpumpe 8 und eine zweite Zahnradpumpe 9 sichergestellt.

Das einwandfreie Durchmischen der Schmelze wird durch einen Mischer 10 bewerkstelligt, der als statischer Mischer ausgebildet ist und sich hinter dem Schmelzekühler 7 und dem Extrusionswerkzeug 2 befindet.

Nach dem Extruder 1 und vor dem Schmelzekühler 7 sind noch zwei Schmelzefilter 11 und 12 angeordnet.

Die vorgeschlagene Vorrichtung ist auch geeignet, ein weiteres Kunststoffmaterial der produzierten Schmelze beizumischen. Hierzu ist hinter dem statischen Mischer 10 und vor dem Extrusionswerkzeug 2 ein weiterer Extruder 13 angeordnet, mit dem ein weiteres Material dem Schmelzestrom im Wege der Co-Extrusion zuextrudiert werden kann.

Nicht näher dargestellt ist, dass an beliebigen Stellen der Vorrichtung bei Bedarf ein Strömungsmedium zugeführt werden kann, d. h. es können entlang der Verarbeitungstrecke zwischen dem Extruder 1 und dem Extrusionswerkzeug 2 verschiedene Gaseinspritzpunkte vorgesehen werden.

Die vorgeschlagene Anordnung erlaubt die Herstellung qualitativ hochwertiger Formteile bei Einhaltung einer geringen Verarbeitungstemperatur und einer entsprechend hohen Viskosität, so dass auch bei relativ geringwertigen Ausgangsprodukten eine einwandfreie Verarbeitung möglich ist.

### Bezugszeichenliste:

- 1: Extruder
- 2: Extrusionswerkzeug
- 3: Schnecke
- 4: Schnecke
- 5: Auslass des Extruders
- 6: Einlass des Extrusionswerkzeugs
- 7: Schmelzekühler
- 8: Pumpe (Zahnradpumpe)
- 9: Pumpe (Zahnradpumpe)
- 10: Mischer (statischer Mischer)
- 11: Schmelzefilter
- 12: Schmelzefilter
- 13: weiterer Extruder (Co-Extruder)
- 14: Kühlvorrichtung

- R: Förderrichtung
- α: Winkel

## Patentansprüche

1. Verfahren zur Herstellung eines Produkts aus thermoplastischem Material durch Extrusion, bei dem das Material in einem Extruder (1) plastifiziert und in eine Förderrichtung (R) zu einem Extrusionswerkzeug (2) gefördert wird, durch das das Material unter Formgebung ausgebracht wird, wobei zwischen dem Auslass (5) des Extruders (1) und dem Einlass (6) des Extrusionswerkzeugs (2) mindestens ein Schmelzekühler (7) angeordnet ist, mit dem das im Extruder (1) plastifizierte Material gekühlt wird,
**dadurch gekennzeichnet, dass**
der Extruder (1) als Doppelschneckenextruder mit zwei miteinander in Eingriff stehenden konischen Schnecken (3, 4) ausgebildet ist, wobei die beiden Schnecken (3, 4) bei der Extrusion von einem Antrieb gleichsinnig gedreht werden.

2. Verfahren nach Anspruch 1, **dadurch gekennzeichnet, dass** mit ihm ein bahnförmiges Produkt hergestellt wird, das eine Breite und eine Dicke aufweist, wobei die Breite mindestens das 25-fache der Dicke beträgt, wobei das Produkt vorzugsweise eine Folie oder Platte ist.

3. Verfahren nach Anspruch 1 oder 2, **dadurch gekennzeichnet, dass** an mindestens einer Stelle im Bereich des Extruders (1), im Bereich des Extrusionswerkzeugs (2) und/oder zwischen dem Extruder (1) und dem Extrusionswerkzeug (2) dem Material ein Medium, insbesondere ein Schäumungsmedium, zugegeben wird.

4. Verfahren nach einem der Ansprüche 1 bis 3, **dadurch gekennzeichnet, dass** an mindestens einer Stelle zwischen dem Extruder (1) und dem Extrusionswerkzeug (2) der Druck im plastifizierten Material erhöht oder reduziert wird, vorzugsweise mittels einer Zahnradpumpe (8, 9).

5. Verfahren nach Anspruch 4, **dadurch gekennzeichnet, dass** der Druck im plastifizierten Material zwischen dem Extruder (1) und dem Schmelzekühler (7) und zwischen dem Schmelzekühler (7) und dem Extrusionswerkzeug (2) erhöht oder reduziert wird.

6. Verfahren nach einem der Ansprüche 1 bis 5, **dadurch gekennzeichnet, dass** an mindestens einer Stelle zwischen dem Extruder (1) und dem Extrusionswerkzeug (2) das plastifizierte Material gemischt wird, vorzugsweise mittels eines statischen Mischers (10).

7. Verfahren nach Anspruch 6, **dadurch gekennzeichnet, dass** das plastifizierte Material zwischen dem Schmelzekühler (7) und dem Extrusionswerkzeug (2) gemischt wird.

8. Verfahren nach einem der Ansprüche 1 bis 7, **dadurch gekennzeichnet, dass** an mindestens einer Stelle zwischen dem Extruder (1) und dem Extrusionswerkzeug (2) das plastifizierte Material mittels eines Schmelzefilters (11, 12) gefiltert wird.

9. Verfahren nach Anspruch 8, **dadurch gekennzeichnet, dass** das plastifizierte Material zwischen dem Extruder (1) und dem Schmelzekühler (7) gefiltert wird.

10. Verfahren nach einem der Ansprüche 1 bis 9, **dadurch gekennzeichnet, dass** dem plastifizierten Material an mindestens einer Stelle zwischen dem Extruder (1) und dem Extrusionswerkzeug (2) ein weiteres Material zugemischt wird, vorzugsweise mittels Co-Extrusion durch einen weiteren Extruder (13), wobei insbesondere das Zumischen des weiteren Materials unmittelbar vor dem Extrusionswerkzeug (2) erfolgt.

11. Verfahren nach einem der Ansprüche 1 bis 10, **dadurch gekennzeichnet, dass** das plastifizierte Material an mindestens einer Stelle im Extruder (1) und/oder zwischen dem Extruder (1) und dem Extrusionswerkzeug (2) entgast wird.

12. Verfahren nach einem der Ansprüche 1 bis 11, **dadurch gekennzeichnet, dass** das plastifizierte Material im Extrusionswerkzeug (2) eine Viskosität von mehr als 1.000 Pas aufweist.

13. Vorrichtung zur Herstellung eines Produkts aus thermoplastischem Material, umfassend einen Extruder (1) zum Plastifizieren des Materials und Ausbringen in eine Förderrichtung (R) zu einem Extrusionswerkzeug (2), das das Material unter Formgebung ausbringen kann, wobei zwischen dem Auslass (5) des Extruders (1) und dem Einlass (6) des Extrusionswerkzeugs (2) ein Schmelzekühler (7) zur Kühlung des im Extruder (1) plastifizierten Materials angeordnet ist, insbesondere zur Durchführung des Verfahrens nach einem der Ansprüche 1 bis 12,
**dadurch gekennzeichnet, dass**
der Extruder (1) als Doppelschneckenextruder mit zwei miteinander in Eingriff stehenden konischen Schnecken (3, 4) ausgebildet ist, wobei die beiden Schnecken (3, 4) mit einem Antrieb zum gleichsinnigen Drehen während der Extrusion in Verbindung stehen.

14. Vorrichtung nach Anspruch 13, **dadurch gekennzeichnet, dass** an mindestens einer Stelle zwischen dem Extruder (1) und dem Extrusionswerkzeug (2) eine Pumpe (8, 9), vorzugsweise eine Zahnradpumpe, angeordnet ist.

15. Vorrichtung nach Anspruch 13 oder 14, **dadurch gekennzeichnet, dass** an mindestens einer Stelle zwischen dem Extruder (1) und dem Extrusionswerkzeug (2) mindestens ein Mischer (10), vorzugsweise ein statischer Mischer, und/oder mindestens ein Schmelzefilter (11, 12) und/oder mindestens eine Anordnung zur Eingabe eines Schäumungsmediums und/oder mindestens eine Entgasungseinrichtung angeordnet ist.

## Claims

1. Method for the production of a product made of thermoplastic material by extrusion, at which the material is plasticised in an extruder (1) and is expedited in a direction of flow (R) to an extrusion die (2), through which the material is output and shaped, wherein between the outlet (5) of the extruder (1) and the inlet (6) of the extrusion dies (2) at least one melt cooler (7) is arranged by which the material which is plasticised in the extruder (1) is cooled,
**characterized in that**
the extruder (1) is designed as double screw extruder with two conical worms (3, 4) which mesh with another, wherein the two worms (3, 4) are rotated by a drive in the same direction at the extrusion.

2. Method according to claim 1, **characterized in that** a sheet-shaped product is produced with the same which product has a width and a thickness, wherein the width is at least 25 times of the thickness, wherein the product is preferably a foil or a sheet.

3. Method according to claim 1 or 2, **characterized in that** at at least one location in the region of the extruder (1), in the region of the extrusion die (2) and/or between the extruder (1) and the extrusion die (2) a medium is added to the material, especially a foaming agent.

4. Method according to one of claims 1 to 3, **characterized in that** at at least one location between the extruder (1) and the extrusion dies (2) the pressure in the plasticised material is increased or reduced, preferably by means of a gear pump (8, 9).

5. Method according to claim 4, **characterized in that** the pressure in the plasticised material between the extruder (1) and the melt cooler (7) and between the melt cooler (7) and the extrusion die (2) is increased or reduced.

6. Method according to one of claims 1 to 5, **characterized in that** at at least one location between the extruder (1) and the extrusion die (2) the plasticised material is mixed, preferably by means of a static mixer (10).

7. Method according to claim 6, **characterized in that** the plasticised material is mixed between the melt cooler (7) and the extrusion die (2).

8. Method according to one of claims 1 to 7, **characterized in that** at at least one location between the extruder (1) and the extrusion die (2) the plasticised material is filtered by means of a melt filter (11, 12).

9. Method according to claim 8, **characterized in that** the plasticised material is filtered between the extruder (1) and the melt cooler (7).

10. Method according to one of claims 1 to 9, **characterized in that** the plasticised material at at least one location between the extruder (1) and the extrusion die (2) a further material is admixed, preferably by means of co-extrusion by a further extruder (13), wherein especially the admixing of the further material takes place immediately before the extrusion die (2).

11. Method according to one of claims 1 to 10, **characterized in that** the plasticised material is degassed at at least one location in the extruder (1) and/or between the extruder (1) and the extrusion die (2).

12. Method according to one of claims 1 to 11, **characterized in that** the plasticised material has a viscosity in the extrusion die (2) of more than 1,000 Pas.

13. Device for the production of a product made of thermoplastic material comprising an extruder (1) for plasticising of the material and expediting in a direction of flow (R) to an extrusion die (2), which can output and shape the material, wherein between the outlet (5) of the extruder (1) and the inlet (6) of the extrusion dies (2) at least one melt cooler (7) is arranged for cooling of the material which is plasticised in the extruder (1), especially for carrying out the method according to one of claims 1 to 12,
**characterized in that**
the extruder (1) is designed as double screw extruder with two conical worms (3, 4) which mesh with another, wherein the two worms (3, 4) are in connection with a drive for rotating in the same direction during the extrusion.

14. Device according to claim 13, **characterized in that** at at least one location between the extruder (1) and the extrusion die (2) a pump (8), preferably a gear pump, is arranged.

15. Device according to claim 13 or 14, **characterized in that** at at least one location between the extruder (1) and the extrusion die (2) at least one mixer (10), preferably a static mixer, and/or at least one melt filter (11, 12) and/or at least one device for adding a foaming agent and/or at least one degassing device is arranged.

## Revendications

1. Procédé de fabrication d'un produit en matériau thermoplastique par extrusion, dans lequel le matériau est plastifié dans une extrudeuse (1) et est transporté dans une direction de transport (R) jusqu'à un outil d'extrusion (2), à travers lequel le matériau est déchargé tout en étant formé, au moins un refroidisseur de matière en fusion (7) étant disposé entre la sortie (5) de l'extrudeuse (1) et l'entrée (6) de l'outil d'extrusion (2), avec lequel le matériau plastifié dans l'extrudeuse (1) est refroidi,
**caractérisé en ce que**
l'extrudeuse (1) est réalisée sous forme d'extrudeuse à deux vis avec deux vis sans fin coniques (3, 4) en prise l'une avec l'autre, les deux vis (3, 4), lors de l'extrusion, étant tournées dans le même sens par un entraînement.

2. Procédé selon la revendication 1, **caractérisé en ce qu'**il permet de fabriquer un produit en forme de bande qui présente une largeur et une épaisseur, la largeur mesurant au moins 25 fois l'épaisseur, le produit étant de préférence une feuille ou une plaque.

3. Procédé selon la revendication 1 ou 2, **caractérisé en ce qu'**un milieu, en particulier un milieu de moussage, est ajouté au matériau en au moins un emplacement dans la région de l'extrudeuse (1), dans la région de l'outil d'extrusion (2) et/ou entre l'extrudeuse (1) et l'outil d'extrusion (2).

4. Procédé selon l'une quelconque des revendications 1 à 3, **caractérisé en ce qu'**en au moins un emplacement entre l'extrudeuse (1) et l'outil d'extrusion (2), la pression dans le matériau plastifié est augmentée ou réduite, de préférence au moyen d'une pompe à engrenage (8, 9).

5. Procédé selon la revendication 4, **caractérisé en ce que** la pression dans le matériau plastifié entre l'extrudeuse (1) et le refroidisseur de matière en fusion (7) et entre le refroidisseur de matière en fusion (7) et l'outil d'extrusion (2) est augmentée ou réduite.

6. Procédé selon l'une quelconque des revendications 1 à 5, **caractérisé en ce qu'**en au moins un emplacement entre l'extrudeuse (1) et l'outil d'extrusion (2), le matériau plastifié est mélangé, de préférence au moyen d'un mélangeur statique (10).

7. Procédé selon la revendication 6, **caractérisé en ce que** le matériau plastifié est mélangé entre le refroidisseur de matière en fusion (7) et l'outil d'extrusion (2).

8. Procédé selon l'une quelconque des revendications 1 à 7, **caractérisé en ce qu'**en au moins un emplacement entre l'extrudeuse (1) et l'outil d'extrusion (2), le matériau plastifié est filtré au moyen d'un filtre de matière en fusion (11, 12) .

9. Procédé selon la revendication 8, **caractérisé en ce que** le matériau plastifié est filtré entre l'extrudeuse (1) et le refroidisseur de matière en fusion (7) .

10. Procédé selon l'une quelconque des revendications 1 à 9, **caractérisé en ce qu'**un matériau supplémentaire est ajouté en mélange au matériau plastifié en au moins un emplacement entre l'extrudeuse (1) et l'outil d'extrusion (2), de préférence au moyen d'une co-extrusion à travers une extrudeuse supplémentaire (13), en particulier l'addition dans le mélange du matériau supplémentaire s'effectuant directement avant l'outil d'extrusion (2).

11. Procédé selon l'une quelconque des revendications 1 à 10, **caractérisé en ce que** le matériau plastifié est dégazé en au moins un emplacement dans l'extrudeuse (1) et/ou entre l'extrudeuse (1) et l'outil d'extrusion (2).

12. Procédé selon l'une quelconque des revendications 1 à 11, **caractérisé en ce que** le matériau plastifié dans l'outil d'extrusion (2) présente une viscosité supérieure à 1 000 Pas.

13. Dispositif de fabrication d'un produit en matériau thermoplastique, comprenant une extrudeuse (1) pour plastifier le matériau et le décharger dans une direction de transport (R) jusqu'à un outil d'extrusion (2), qui peut décharger le matériau en lui donnant sa forme, un refroidisseur de matière en fusion (7) pour refroidir le matériau plastifié dans l'extrudeuse (1) étant disposé entre la sortie (5) de l'extrudeuse (1) et l'entrée (6) de l'outil d'extrusion (2), en particulier pour mettre en oeuvre le procédé selon l'une quelconque des revendications 1 à 12,
**caractérisé en ce que**
l'extrudeuse (1) est réalisée sous forme d'extrudeuse à deux vis avec deux vis sans fin (3, 4) en prise l'une avec l'autre, les deux vis sans fin (3, 4) étant en liaison avec un entraînement en vue de leur rotation dans le même sens pendant l'extrusion.

14. Dispositif selon la revendication 3, **caractérisé en ce qu'**en au moins un emplacement entre l'extrudeuse (1) et l'outil d'extrusion (2) est disposée une pompe (8, 9), de préférence une pompe à engrenage.

15. Dispositif selon la revendication 13 ou 14, **caractérisé en ce qu'**en au moins un emplacement entre l'extrudeuse (1) et l'outil d'extrusion (2) est disposé au moins un mélangeur (10), de préférence un mélangeur statique, et/ou au moins un filtre de matière en fusion (11, 12) et/ou au moins un agencement pour introduire un milieu de moussage et/ou au moins un dispositif de dégazage.
